Europäisches Patentamt

European Patent Office

Office européen des brevets

(11) Veröffentlichungsnummer: **0 369 421 A2**

(12) **EUROPÄISCHE PATENTANMELDUNG**

(21) Anmeldenummer: **89121131.0**

(22) Anmeldetag: **15.11.89**

(51) Int. Cl.5: **F16D 3/84, F16P 1/02**

(30) Priorität: **17.11.88 DE 3838803**

(43) Veröffentlichungstag der Anmeldung:
**23.05.90 Patentblatt 90/21**

(84) Benannte Vertragsstaaten:
**AT BE CH DE ES FR GB IT LI**

(71) Anmelder: **DEERE & COMPANY**
**1 John Deere Road**
**Moline, Illinois 61265(US)**

(72) Erfinder: **Der Erfinder hat auf seine Nennung verzichtet**

(74) Vertreter: **Feldmann, Bernhard et al**
**DEERE & COMPANY European Office Patent**
**Department Steubenstrasse 36-42**
**D-6800 Mannheim 1(DE)**

(54) **Zapfwellenschutz.**

(57) Eine Schutzabdeckung für Zapfwellen (10) mit einem U-förmig ausgebildeten Gehäuseteil (22), welches in einer Ausgangslage die Zapfwelle (10) von oben und von beiden Seiten her abdeckt, wird so ausgebildet, daß das Gehäuseteil (22) zwischen zwei Wangen (12, 14) um eine Achse (34) schwenkbar gelagert ist. Das Gehäuseteil (22) läßt sich aus einer Ausgangslage herunterklappen, so daß der Basisschenkel (24) aus einer waagerechten Lage in eine senkrechte Lage übergeht und die Stirnseite der Zapfwelle (10) abdeckt. Das Gehäuseteil (22) enthält ferner ein zwischen den freien Schenkeln (26, 28) angeordnetes Abdeckteil (36), welches bei heruntergeklapptem Gehäuseteil (22) die Zapfwelle von oben her abdeckt.

FIG.1

EP 0 369 421 A2

## Zapfwellenschutz

Die Erfindung betrifft eine Schutzabdeckung zum Verhindern der Berührung mindestens eines frei endenden, sich drehenden Teils, insbesondere Zapfwelle eines Ackerschleppers, mit einem U-förmig ausgebildeten Gehäuseteil, dessen Basisschenkel und freie Schenkel in einer ersten Schutzstellung im wesentlichen parallel zum drehenden Teil ausgerichtet sind und dieses von drei Seiten umschließen, und mit einer senkrecht zum drehenden Teil und parallel zur Basisschenkelfläche verlaufenden Achse, um die das U-förmige Gehäuseteil verschwenkbar ist.

Als frei endendes, sich drehendes Teil kommt insbesondere eine Zapfwelle in Betracht. Diese ist das Endstück einer Antriebswelle, beispielsweise einer landwirtschaftlichen Zugmaschine zur Übertragung der Bewegung auf ein Arbeitsgerät. Die Zapfwelle ragt gewöhnlich frei aus dem Getriebegehäuse heraus. Um Unfälle zu vermeiden, muß die Zapfwelle entsprechend den Sicherheitsvorschriften durch ein an der Antriebseinheit, beispielsweise der Zugmaschine, befestigtes Schutzgehäuse geschützt sein. Die erforderlichen Abmessungen des Schutzgehäuses sind durch die Sicherheitsvorschriften festgelegt. Bei Zugmaschinen muß die Zapfwelle zumindestens oben und an ihren beiden Seiten verdeckt sein.

Durch die DE-PS 34 02 065 ist eine Schutzabdeckung bekanntgeworden, bei der zur Erleichterung der Montage von Arbeitsgeräten mit Zapfwellenantrieb ein Schutzschild schnell und ohne den Einsatz von Werkzeugen nach oben aufgeklappt werden kann. Das Schutzschild ist dabei U-förmig ausgebildet und deckt die Zapfwelle oben und seitlich ab. Die Schenkel (Seitenteile) des U-förmigen Schutzschildes sind in einem horizontalen Schwenklager, das quer zur Zapfwelle verläuft, gelagert. Um dieses Lager läßt sich das Schutzschild verschwenken, so daß der in Normalstellung oben liegende Basisschenkel (Oberteil) des U-förmigen Schutzschildes in Richtung Getriebegehäuse geklappt werden kann.

Neben dem am Getriebegehäuse befestigten Schutzgehäuse wird eine die Zapfwelle vollständig bedeckende, zusätzliche, nicht drehende Schutzkappe bereitgestellt, die die hervorstehende Zapfwelle abdeckt, wenn die Zapfwelle nicht benutzt wird. Da das an dem Getriebegehäuse befestigte Schutzgehäuse zur Zapfwellenstirnseite hin offen ist, dient die Schutzkappe dem Berührungsschutz für den Fall, daß kein Arbeitsgerät an der Zapfwelle angeschlossen ist. Die Schutzkappe ist bei Montage einer Arbeitsmaschine jeweils an- bzw. abzubauen. Es muß an geeigneter Stelle in der Nähe der Zapfwelle eine Aufbewahreinrichtung für die Schutzkappe geschaffen werden. Hierbei ist der Gefahr des Verlustes der Schutzkappe Rechnung zu tragen.

Die mit der Erfindung zu lösende Aufgabe wird darin gesehen, einen Zapfwellenschutz zu schaffen, der die Bereitstellung der zusätzlichen Schutzkappe entbehrlich macht, so daß dessen An- und Abbau entbehrlich sind und auch die mit der Verlustsicherung auftretenden Probleme entfallen.

Die Aufgabe wird nach der Erfindung dadurch gelöst, daß das Gehäuseteil aus seiner ersten Schutzstellung so um die Achse verschwenkbar ist, daß der Basisschenkel in einer zweiten Schutzstellung eine Lage vor der nach außen stehenden Stirnfläche der Zapfwelle einnimmt. Der Basisschenkel ist dabei im wesentlichen senkrecht ausgerichtet.

Er läßt sich also aus einer Lage oberhalb der Zapfwelle herunterschwenken in eine Lage, die die Stirnfläche der Zapfwelle abdeckt.

Ferner enthält das Gehäuseteil vorzugsweise ein weiteres Abdeckteil, welches zwischen den freien Schenkeln liegt und an dem Basisschenkel angrenzt. Bei heruntergeklapptem Gehäuseteil liegt dieses Abdeckteil parallel zur Zapfwelle und deckt diese von oben ab.

Diese erfindungsgemäße Ausbildung eines Zapfwellenschutzes gewährleistet, daß bei hochgeklapptem Gehäuseteil (erste Schutzstellung) und an die Zapfwelle angeschlossenem Arbeitsgerät die Zapfwelle von oben und seitlich entsprechend den Vorschriften abgedeckt ist. Ist dagegen kein Arbeitsgerät an der Zapfwelle angeschlossen, so läßt sich das Gehäuseteil herunterklappen (zweite Schutzstellung). In dieser Lage ist die Zapfwelle von oben, von beiden Seiten und an ihrer Stirnseite durch die Schutzabdeckung abgedeckt, so daß auch in dieser Lage die Sicherheitsvorschriften eingehalten werden. Eine zusätzliche Schutzkappe wird nicht mehr benötigt.

In vorteilhafter Weise sind beidseits der Zapfwelle je eine im wesentlichen senkrecht ausgerichtete Wange am die Zapfwelle aufnehmenden Gehäuse, insbesondere Getriebegehäuse, befestigbar. Die Wangen sind so ausgebildet, daß sie eine ausreichende seitliche Abdeckung der Zapfwelle gewährleisten. Ferner nehmen die Wangen die Schwenkachsen auf, um die das U-förmige Gehäuseteil verschwenkbar ist. Durch diese Ausgestaltung ist auch dann eine zuverlässige seitliche Abdeckung der Zapfwelle gewährleistet, wenn die Seitenschenkel des U-förmigen Gehäuseteils nicht so lang ausgebildet sind, daß sie die Zapfwelle seitlich vollständig abdecken. Als Lagerung für die Schwenkachse werden bevorzugt Bolzen verwendet.

Es ist auch zweckmäßig, daß unterhalb der Zapfwelle an dem die Zapfwelle aufnehmenden Gehäuse, insbesondere Getriebegehäuse, ein horizontal ausgerichtetes Schutzschild angeordnet ist, welches die Zapfwelle von unten her abdeckt, um hierdurch eine allseitige Abdeckung der Zapfwelle insbesondere in der zweiten Schutzstellung zu verwirklichen.

Anhand der Zeichnung, die ein Ausführungsbeispiel der Erfindung zeigt, sollen die Erfindung sowie weitere Vorteile und vorteilhafte Ausgestaltungen der Erfindung näher erläutert und beschrieben werden.

Es zeigt:

Fig. 1 die schematische, perspektivische Darstellung einer erfindungsgemäßen Schutzabdeckung, bei der die Zapfwelle von ihrer Stirnseite her zugänglich ist (erste Schutzstellung); und

Fig. 2 die schematische, perspektivische Darstellung einer Schutzabdeckung gemäß Fig. 1, bei der ein Gehäuseteil heruntergeklappt ist und die Stirnseite der Zapfwelle abdeckt (zweite Schutzstellung).

Wie aus den Figuren hervorgeht, sind beidseits der horizontal ausgerichteten Zapfwelle 10 je eine Wange 12, 14 angeordnet. Die Wangen 12, 14 bestehen aus Stahlblechen, die senkrecht ausgerichtet sind. Jeweils eine senkrecht verlaufende Stirnseite 16, 18 der Wangen 12, 14 ist an einem nicht dargestellten Getriebegehäuse befestigt. Aus diesem Getriebegehäuse tritt auch die Zapfwelle 10 aus. Die Wangen 12, 14 decken die Zapfwelle 10 seitlich ab und erfüllen die Schutzvorschriften, denen zufolge der seitliche Zugang zu der Zapfwelle 10 verhindert werden soll.

Die beiden Wangen 12, 14 sind im Bereich ihrer unteren Kanten durch ein Schutzschild 20 starr miteinander verbunden. Dieses Schutzschild deckt die Zapfwelle 10 von unten her ab. In den Schutzvorschriften für landwirtschaftliche Zugmaschinen ist ein derartiges Schutzschild 20 für die erste Schutzstellung nicht vorgesehen. Auf dieses Schutzschild 20 kann daher dann verzichtet werden, wenn es den Zugang zur Zapfwelle 10 für die Montage von Arbeitsgeräten unnötig erschwert.

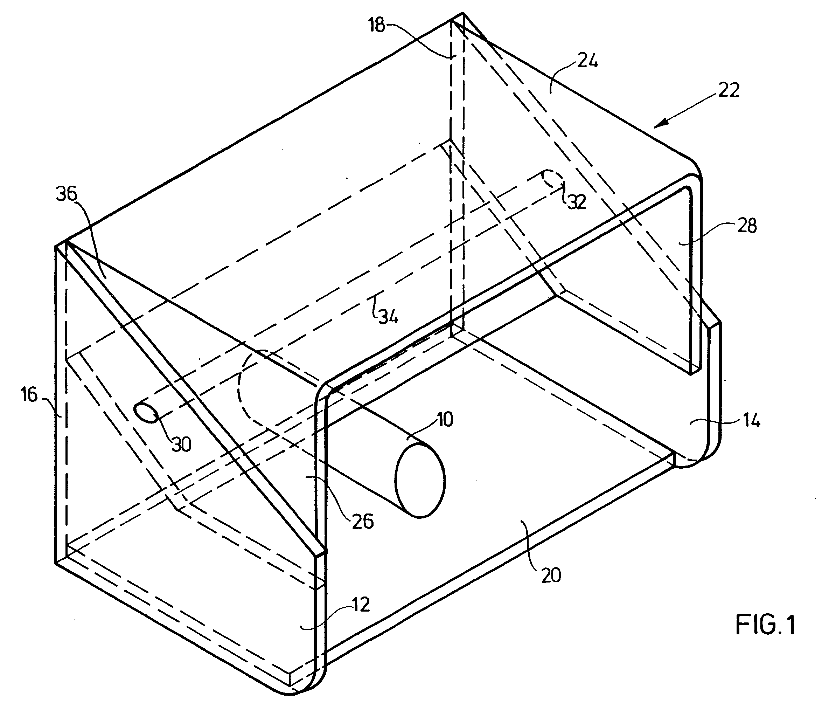

Zwischen den Wangen 12, 14 ist in deren oberen Bereich ein U-förmiges Gehäuseteil 22 angeordnet. Gemäß Fig. 1 liegt der Basisschenkel 24 des Gehäuseteils 22 waagerecht oberhalb der Zapfwelle 10 und deckt diese von oben her ab. Die beiden freien Schenkel 26, 28 erstrecken sich senkrecht nach unten und liegen parallel zu den Wangen 12, 14.

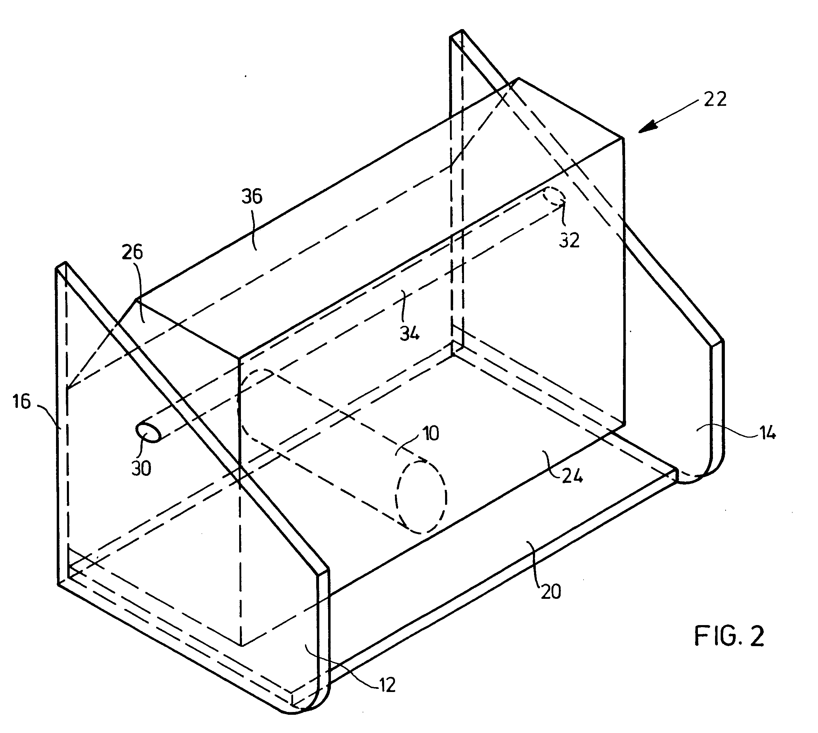

Das Gehäuseteil 22 ist mittels lediglich angedeuteter Bolzen 30, 32 zwischen den Wangen 12, 14 drehbar gelagert. Die Schwenkachse 34 liegt oberhalb der Zapfwelle 10. Aufgrund dieser Schwenklagerung läßt sich das Gehäuseteil 22 herunterklappen. Die heruntergeklappte Stellung des Gehäuseteils 22 ist der Fig. 2 zu entnehmen. Dort ist der Basisschenkel 24 senkrecht ausgerichtet und liegt vor der Stirnseite der Zapfwelle 10. Zwischen den seitlichen, freien Schenkeln 26, 28 ist in deren oberen Bereich ein Abdeckteil 36 mit dem Gehäuseteil 22 starr verbunden. Das Abdeckteil 36 ist gemäß Fig. 2 waagerecht ausgebildet und zur Getriebegehäuseseite hin nach unten hin abgewinkelt. Der waagerechte Teil des Abdeckteils 36 schließt sich an den Basisschenkel 24 an. Durch diese Ausgestaltung des Abdeckteils 36 wird auch bei heruntergeschwenktem Gehäuseteil 22 die Zapfwelle 10 von oben her abgedeckt, so daß von hier aus kein Eingriff in die Zapfwelle 10 möglich ist. Damit ist bei heruntergeklapptem Gehäuseteil 22 die Zapfwelle allseits durch Teile der Schutzabdeckung abgedeckt, so daß die Schutzbestimmungen eingehalten werden.

## Ansprüche

1. Schutzabdeckung zum Verhindern der Berührung mindestens eines frei endenden, sich drehenden Teils, insbesondere Zapfwelle eines Ackerschleppers, mit einem U-förmig ausgebildeten Gehäuseteil, dessen Basisschenkel und freie Schenkel in einer ersten Schutzstellung im wesentlichen parallel zum drehenden Teil ausgerichtet sind und dieses von drei Seiten umschließen, und mit einer senkrecht zum drehenden Teil und parallel zur Basisschenkelfläche verlaufenden Achse, um die das U-förmige Gehäuseteil verschwenkbar ist, dadurch gekennzeichnet, daß die Schwenkachse (34) derart angeordnet und das U-förmige Gehäuseteil (22) derart ausgebildet ist, daß sich das U-förmige Gehäuseteil (22) aus der ersten Schutzstellung (Fig. 1) in eine zweite Schutzstellung (Fig. 2) verschwenken läßt, wobei der Basisschenkel (24) in der zweiten Schutzstellung vor der Stirnseite des sich drehenden Teils (10) liegt.

2. Schutzabdeckung nach Anspruch 1, dadurch gekennzeichnet, daß zwischen den freien Schenkeln (26, 28) des U-förmigen Gehäuseteils (22) ein weiteres Abdeckteil (36) angeordnet ist, welches wenigstens teilweise senkrecht zum Basisschenkel (24) ausgerichtet ist und an diesen angrenzt, derart daß es das sich drehende Teil (10) in der zweiten Schutzstellung von oben abdeckt.

3. Schutzabdeckung nach Anspruch 1 oder 2, dadurch gekennzeichnet, daß beidseits der Zapfwelle (10) je eine im wesentlichen senkrecht ausgerichtete Wange (12, 14) am die Zapfwelle (10) aufnehmenden Gehäuse befestigbar ist, die so ausgebildet ist, daß sie eine ausreichende seitliche Abdeckung der Zapfwelle (10) gewährleistet, und daß die Wangen (12, 14) die Lagerungen für die Schwenkachse (34) des U-förmigen Gehäuseteils (22) aufnehmen.

4. Schutzabdeckung nach Anspruch 3, dadurch gekennzeichnet, daß als Lagerung für die Schwenkachse (34) Bolzen (30) dienen, die jeweils eine Wange (12, 14) mit dem benachbarten freien Schenkel (26, 28) des U-förmigen Gehäuseteils verbinden.

5. Schutzabdeckung nach einem der Ansprüche 1 bis 4, dadurch gekennzeichnet, daß unterhalb der Zapfwelle (10) am die Zapfwelle (10) aufnehmenden Gehäuse ein horizontal ausgerichtetes Schutzschild (20) angeordnet ist, welches die Zapfwelle (10) von unten her abdeckt.

FIG.1

EP 0 369 421 A2

FIG. 2

EP 0 369 421 A2